# Europäisches Patentamt
# European Patent Office
# Office européen des brevets

(11) Publication number: **0 031 196**
**B1**

(12) **EUROPEAN PATENT SPECIFICATION**

(45) Date of publication of patent specification: **25.07.84**

(21) Application number: **80303749.8**

(22) Date of filing: **23.10.80**

(51) Int. Cl.³: **G 01 V 1/13, G 01 V 1/387, G 01 V 1/133**

(54) Underwater seismic source and its use.

(30) Priority: **25.10.79 GB 7937051**

(43) Date of publication of application: **01.07.81 Bulletin 81/26**

(45) Publication of the grant of the patent: **25.07.84 Bulletin 84/30**

(84) Designated Contracting States: **DE FR IT NL SE**

(56) References cited:
GB - A - 1 417 948
GB - A - 1 435 788
US - A - 2 747 172
US - A - 3 304 533
US - A - 3 400 783

(73) Proprietor: **Horizon Exploration Limited Horizon House Azalea Drive Swanley, Kent BR8 8JR (GB)**

(72) Inventor: **Newman, Paul Buckhurst Lodge 333 Main Road Westerham Hill Westerham, Kent (GB)**

(74) Representative: **Abrams, Michael John et al, Haseltine Lake & Co. 28, Southampton Buildings Chancery Lane London WC2A 1AT (GB)**

The file contains technical information submitted after the application was filed and not included in this specification

Courier Press, Leamington Spa, England.

# O 031 196

## Description

This invention relates to an underwater seismic source and its use.

Conventional methods of seismic exploration involve the initiation of seismic waves which travel through the formations of interest and suffer reflection and refraction by various layers. One or more receivers is or are located so as to pick up wave forms which have been reflected or reflected and refracted by the formation of interest.

When seismic exploration is carried out on land, a variety of sources can be used to initiate the seismic wave. For underwater seismic exploration, the most widely used source is a device known as an air gun. This expels a plug of compressed air directly into the water in which the air gun is immersed. This results in a wave front travelling away from the air gun, the wave front being largely undisturbed by the water through which it travels. At the sea bottom, the wave front continues travelling downwards into the submarine structure. The strata which lie beneath the sea cause a seismic wave to be reflected and refracted, and resultant wave reflections are detected by one or more hydrophones which is or are suspended in the water. By analysing the response from the or each hydrophone, information about the submarine geology is obtained.

A major disadvantage of the air gun in underwater testing is that the air expelled from the gun acts as a bubble which oscillates. Thus, instead of producing a single wave front, an air gun tends to produce a plurality of waves which correspond to the oscillations of the air bubble. Thus a repetitive wave form results. This is undesirable because it renders difficult the diagnosis of the information received by the hydrophones.

A number of arrangements have been devised in an attempt to minimise this difficulty associated with air guns. One of these arrangements is to modify the air gun itself by using what is known as "waveshape kit". This is a mechanical device which is attached to the air gun and which, in effect, damps the oscillation of the air bubble produced when the air gun is fired. Another arrangement is to employ a plurality of air guns which are fired simultaneously, but which expel a different volume of air into the water. This results in a series of bubbles of different sizes, which consequently oscillate at different rates. The overall effect is to amplify the principal wave front while diminishing the subsequent wave pulses due to destructive interference.

Quite commonly both of these techniques may be used in combination resulting in mixed volume arrays of air guns individually fitted with waveshape kits. An underwater seismic source of this kind is described in GB—A—1,435,788 where the spacing between the guns of differing volume is merely sufficient to prevent coalescence of adjacent bubbles. The radiated pressure amplitude, or the effective 'weight' of each individual gun in an array of this type is then determined in a complicated manner by particulars of the waveshape kits and by the effective volumes of compressed air that are released by the individual guns.

A practice that is sometimes used to improve the directional response of an array of sources or receivers is to assign different weights to equally-spaced elements in the array, the individual weights being calculated according to a variety of alternative mathematical criteria. Examples of amplitude-weighted array designs are described in Geophysics volume 23, pages 1 to 25, for instance. Thus, reflected seismic waves that emerge at angles close to the vertical are enhanced by employing suitable amplitude-weighted arrays whereas seismic noise that propagates in a near-horizontal direction is diminished.

A further technique that can be employed to enhance the directional response of an array of seismic sources or receivers is known as distance-weighting.

This technique is conventionally applied to the locations of hydrophones, each having equal sensitivity or weight, which detect the reflected or reflected and refracted seismic waves which emerge from the underwater strata after the air guns have been fired. In the technique of distance weighting, a plurality of hydrophones is arranged in line, with the hydrophones spaced apart from one another by predetermined distances. The separation between individual hydrophones is generally calculated so as to give what is termed a "centroid distribution"; the mathematical technique for carrying out the calculation is described in U.S. patent No. 3,400,783. The aim is to locate the hydrophones according to a linear density which approximates to the area under a truncated sinc function. This idea is also described in Geophysics volume 21, pages 354 to 355.

It is important to note that conventional amplitude-weighting and distance-weighting methods cannot readily be applied in the design of directional air gun arrays. In a mixed-volume air gun array the weights of individual elements are not independent variables at the disposal of the designer, but are dictated by the need to suppress bubble pulse radiation. Likewise the separation between elements in an air gun array is to some extent governed by the need to avoid, or in some cases to deliberately induce, interaction effects between adjacent elements so as to modify bubble behaviour in a preferred manner.

A further technique for improving the results of underwater seismic exploration by the use of directional source arrays is described in British Patent No. 1,417,948. This technique involves the use of an elongate seismic source comprising a plurality of individual sound sources which are concentrated in a series of arrays distributed over the length of the source.

2

While the background to the invention has been set forth above in relation to air guns as the sound source, it will be appreciated that the same considerations apply to other underwater seismic sources which operate by ejection of a fluid into the ambient water. Another type of fluid gun often used in underwater seismic testing is the water gun, and it is well known that water guns are used in arrays analogous to those adopted with air guns.

We have now devised a technique for underwater seismic investigation which does not require the use of a plurality of arrays disposed over the length of an elongate seismic source, as is required by GB—A—1,417,948. The technique simultaneously embodies the advantages of conventional amplitude weighting and distances weighting in a relatively simple underwater sound source.

According to one aspect of the present invention, there is provided a sound source for use in underwater seismic testing, which source comprises a substantially linear array of a predetermined number $N$ of guns spaced apart at intervals that are in relative proportion to each other according to the intervals between the centroids of the same number, $N$, of areas under a predetermined mathematical window function which is such that (1) the width of the window relates to the length of the array; (2) the function is positive at all points within the window; and (3) the function approximates to the Fourier transform of a single square wave, characterised in that (a) the guns are of differing volumes, and (b) the magnitude of each of the respective areas is such that the ratio between the area in question and the whole area under the said function is the same as the ratio between the effective weight of the gun whose position will relate to the centroid of the area in question and the total effective weight of all the guns. The invention also provides a method of underwater seismic testing in which a substantially linear array of gun sources of differing volumes is spaced out in accordance with the procedure just recited.

The guns used in the present invention are conveniently air guns, although the invention is not limited to the use of air guns.

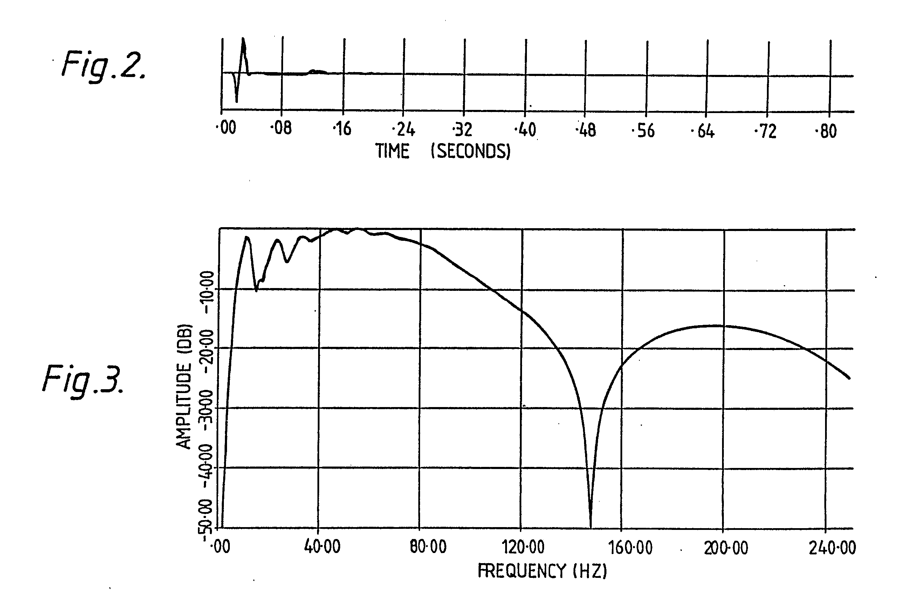

The number of guns, the individual volumes and the total volume are predetermined by means well known in the art to obtain a seismic signature of suitable peak amplitude and peak-to-bubble amplitude ratio, as is illustrated hereinafter by Figure 2, for example. The contribution or 'weight' of each individual gun to the peak pressure signal can then be determined by experimental observation or by calculation.

The magnitude of each of the $N$ respective areas under the predetermined mathematical window function is determined as a function of the primary pressure amplitude response, i.e. the effective weights, of the guns. The mathematical window function can be, for example, a sinc function (sin x/x) or a Hanning function (1+cos $2\pi x/L$). The substantially linear array is preferably symmetrical both with respect to the amplitudes of the guns and their respective spacings. Consequently it is preferred that the mathematical window function is also a symmetrical function. The number $N$ can be odd or even. A wave shape kit can be used on any or all of the guns when air guns are employed.

The invention is illustrated by the following example.

Example

An array of seven air guns was selected, the relative outputs of the guns being determined by experiment as follows:

0.58: 0.59: 0.69: 1.0: 0.69: 0.59: 0.58

The sum of the outputs, or weights, $\Sigma w_i$, was thus

4.72.

The volumes of the guns were 180, 235, 360, 540, 360, 235 and 180 in³ (2.95, 3.85, 5.90, 8.85, 5.90, 3.85 and 2.95 litres, respectively). The effective length of the array was chosen to be 100 metres. As the mathematical function, a Hanning function was selected with the period L=100, the units being metres, i.e.:

$$f(x)=1+\cos 2\pi x/L, \text{ within the range } -50\leqslant x\leqslant+50 \text{ metres.}$$

The following steps illustrate the calculation of the distances between the individual air guns and the centre of the array.

Area of half array equals:

$$\int_0^{50} f(x)dx=[x+1/2\pi \sin 2\pi x/L]_0 L/2=L/2=50 \text{ metres}$$

With the relative outputs given above, $\Sigma w_i=4.72$.

Scaling the weights so that

$$\frac{\Sigma w_i}{2}=50,$$

$$k\Sigma w_i=100; k=100/4.72=21.19.$$

O 031 196

Thus scaled weights are: $w_0=21.19$, $w_1=14.62$, $w_2=12.50$, $w_3=12.29$.

Distance $x_1$:

$$\int_o^{x_1} f(x)dx = \frac{w_o+w_1}{2} \quad \text{i.e. } x_1+50/\pi \cdot \frac{\sin \pi x_1}{50} -17.91=0$$

$$x_2: \int_o^{x_2} f(x)dx = w_o/2+w_1+w_2/2 \quad \text{i.e. } x_2+\frac{50}{\pi} \quad \frac{\sin \pi x_2}{50} -31.47=0$$

$$x_3: \int_o^{x_3} f(x)dx = \frac{w_o+w_1}{2} +w_2+ \frac{w_3}{2}$$

$$\text{i.e. } x_3+\frac{50}{\pi} \quad \frac{\sin \pi x_3}{50} -43.86=0$$

These equations can be solved using graphical methods, or by means of successive approximation techniques that converge upon the exact solution. One such iterative technique gives:—

$$n+1\hat{x}i=n\hat{x}i-\frac{f(n\hat{x}i)}{f^1(n\hat{x}i)},$$

where n is the number of iterations and the prime denotes differentiation.

Applying this technique to the equations of the present Example gives $x_1\cong9.208$, $x_2\cong17.355$, $x_3\cong28.282$ metres, and it is understood that $x_o$ is at the centre of the array which comprises an odd number of elements $N=7$ in the present example. The actual overall length of the array between extreme elements is thus 56.564 m although the distribution of elements is such as to approximate the response of a weighted array of 100 m total length.

Once an array has been designed in this manner it is a simple matter to adjust the breadth of the passband in the wavenumber response by scaling the array dimensions according to a common factor. Scaling the results of the above example such as to arrive at an overall array length of 80 metres, and rounding off the result to an integral number of metres, gives $x_1=13$, $x_2=24$, and $x_3=40$ metres.

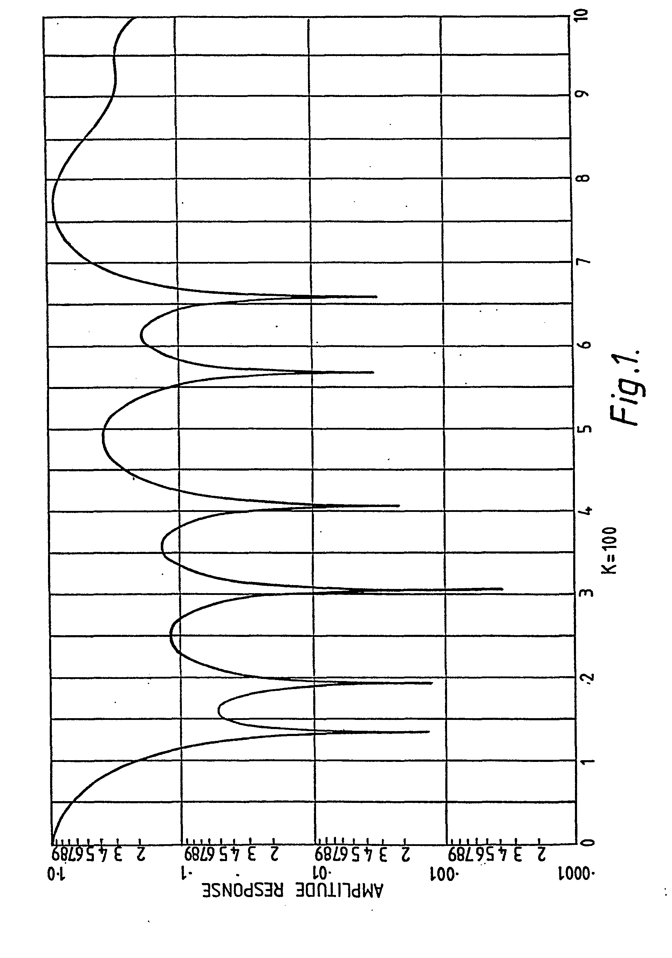

The amplitude response of this particular weighted array as a function of wavenumber, (i.e. reciprocal wavelength), is shown in Figure 1 of the accompanying drawings. Figure 2 shows the far-field pressure response of the air gun array, while Figure 3 shows the amplitude spectrum of the pressure response as a function of frequency. The air guns were located at a depth of 5 metres. Figure 2 shows the peak-to-peak ratio between the primary pulse and residual bubble pulses to be 14.2:1. The peak-to-peak pressure variation of the primary pulse was 31 bar/m.

## Claims

1. A sound source for use in underwater seismic testing, in which the source comprises a substantially linear array of a predetermined number $N$ of guns spaced apart at intervals that are in relative proportion to each other according to the intervals between the centroids of the same number, $N$, of areas under a predetermined mathematical window function which is such that (1) the width of the window relates to the length of the array; (2) the function is positive at all points within the window; and (3) the function approximates to the Fourier transform of a single square wave, characterised in that (a) the guns are of differing volumes, and (b) the magnitude of each of the respective areas is such that the ratio between the area in question and the whole area under the said function is the same as the ratio between the effective weight of the gun whose position will relate to the centroid of the area in question and the total effective weight of all the guns.

2. A sound source as claimed in claim 1, characterised in that the effective weights of the guns increase symmetrically from the ends of the array towards the mid-point thereof.

3. A sound source as claimed in claim 1 or 2, characterised in that the mathematical window function used to determine the position of the guns within the array is a Hanning function.

4. A sound source as claimed in claim 1 or 2, characterised in that the mathematical window function used to determine the position of the guns within the array is a sinc function.

5. A sound source as claimed in any preceding claim, characterised in that there are an odd number of guns in the array.

6. A sound source as claimed in claim 5, characterised in that there are seven guns in the array.

4

7. A sound source as claimed in any preceding claim, characterised in that the guns are air guns.

8. A method of underwater seismic testing, characterised in that a pressure wave is initiated by a sound source as claimed in any preceding claim, and in that reflected and/or reflected and refracted waves are detected by a hydrophone array.

## Revendications

1. Une source sonore pour l'utilisation dans le test sismique sous-marin, cette source comprenant un réseau pratiquement linéaire d'un nombre N prédéterminé de canons espacés à des intervalles qui sont dans des proportions relatives mutuelles correspondant aux intervalles entre les centroïdes du même nombre, N, d'aires sous une fonction de fenêtre mathématique prédéterminée qui répond aux conditions suivantes: (1) la largeur de la fenêtre est liée à la longueur du réseau; (2) la fonction est positive en tout point à l'intérieur de la fenêtre; et (3) la fonction approche la transformée de Fourier d'une onde carrée unique, caractérisée en ce que (a) les canons ont des volumes différents, et (b) la valeur de chacune des aires respectives est telle que le rapport entre l'aire considérée et l'aire totale sous ladite fonction est égal au rapport entre le poids effectif du canon dont la position se rapporte au centroïde de l'aire considérée, et le poids effectif total de tous les canons.

2. Une source sonore selon la revendication 1, caractérisée en ce que les poids effectifs des canons augmentent symétriquement à partir des extrémités du réseau vers le milieu de celui-ci.

3. Une source sonore selon la revendication 1 ou 2, caractérisée en ce que la fonction de fenêtre mathématique utilisée pour déterminer la position des canons dans le réseau est une fonction de Hanning.

4. Une source sonore selon la revendication 1 ou 2, caractérisée en ce que la fonction de fenêtre mathématique utilisée pour déterminer la position des canons dans le réseau est une fonction sinc.

5. Une source sonore selon l'une quelconque des revendications précédentes, caractérisée en ce qu'il y a un nombre impair de canons dans le réseau.

6. Une source sonore selon la revendication 5, caractérisée en ce qu'il y a sept canons dans le réseau.

7. Une source sonore selon l'une quelconque des revendications précédentes, caractérisée en ce que les canons sont des canons à air.

8. Un procédé de test sismique sous-marin, caractérisé en ce qu'on produit une onde de pression avec une source sonore selon l'une quelconque des revendications précédentes, et en ce qu'on détecte les ondes réfléchies et/ou réfléchies et réfractées, avec un réseau d'hydrophones.

## Patentansprüche

1. Schallquelle für die Verwendung bei der seismorgrafischen Unterwasser-Messung, mit einer im wesentlichen geradlinigen Anordnung einer bestimmten Anzahl N von Kanonen, die in Abständen voneinander entfernt sind, die in relativem Verhältnis zueinander entsprechend den Abständen zwischen den Flächenschwerpunkten derselben Anzahl N von Flächen unter einer bestimmten mathematischen Fensterfunktion stehen, die so ist, daß 1. die Breite des Fensters zur der Länge der Anordnung in Beziehung steht, daß 2. die Funktion bei sämtlichen Punkten innerhalb des Fensters positiv ist und daß 3. die Funktion an die Fourier-Transformation einer einzelnen Rechteckwelle approximiert ist, dadurch gekennzeichnet,

a) daß die Kanonen von unterschiedlichen Volumina sind
b) und daß die Größe der jeweiligen Fläche so ist, daß das Verhältnis zwischen der in Frage stehenden Fläche und der Gesamtfläche unter der betreffenden Funktion gleich dem Verhältnis zwischen dem effektiven Gewicht der Kanone, deren Position in Beziehung steht zu der Schwerpunktsmitte der in Frage stehenden Fläche, und dem gesamten effektiven Gewicht sämtlicher Kanonen ist.

2. Schallquelle nach Anspruch 1, dadurch gekennzeichnet, daß die effektiven Gewichte der Kanonen symmetrisch von den Enden der Anordnung zu deren Mittelpunkt hin zunehmen.

3. Schallquelle nach Anspruch 1 oder 2, dadurch gekennzeichnet, daß die zur Bestimmung der Position der Kanonen innerhalb der betreffenden Anordnung benutzte mathematische Fensterfunktion eine Hanning-Funktion ist.

4. Schallquelle nach Anspruch 1 oder 2, dadurch gekennzeichnet, daß die zur Bestimmung der Position der Kanonen innerhalb der betreffenden Anordnung benutzte mathematische Fensterfunktion eine sinc-Funktion ist.

5. Schallquelle nach einem der vorhergehenden Ansprüche, dadurch gekennzeichnet, daß eine ungerade Anzahl von Kanonen in der Anordnung vorgesehen ist.

6. Schallquelle nach Anspruch 5, dadurch gekennzeichnet, daß sieben Kanonen in der Anordnung vorgesehen sind.

7. Schallquelle nach einem der vorhergehenden Ansprüche, dadurch gekennzeichnet, daß die Kanonen Luftgewehre sind.

8. Verfahren zur seismografischen Unterwasser-Prüfung, dadurch gekennzeichnet, daß eine Druckwelle durch eine Schallquelle nach einem der vorhergehenden Ansprüche initiiert wird und daß die reflektierten und/oder reflektierten und gebrochenen Wellen mittels einer Hydrophoanordnung ermittelt werden.

Fig.1.

K=100

0 031 196

Fig.2.

TIME (SECONDS)

Fig.3.

AMPLITUDE (DB)

FREQUENCY (HZ)

0 031 196